# EUROPÄISCHE PATENTSCHRIFT

(11) **EP 2 692 507 B1**
(45) Veröffentlichungstag und Bekanntmachung des Hinweises auf die Patenterteilung: **31.12.2014**
(21) Anmeldenummer: 13003444.0
(22) Anmeldetag: 09.07.2013
(51) Int. Cl.: B29C 53/48, F16L 55/165

(54) **Auskleidungsschlauch mit einem Innenfolienschlauch zur Auskleidung von Rohrleitungen und Verfahren zur fortlaufenden Herstellung eines solchen**
Cladding tube with an internal film hose for cladding pipes and method for the continuous manufacture of the same
Gaine dotée d'un tuyau à film intérieur pour le revêtement de conduites et procédé de fabrication en continu d'une telle gaine

(30) Priorität: 31.07.2012 DE 102012015047
(43) Veröffentlichungstag der Anmeldung: 05.02.2014
(73) Patentinhaber: Brandenburger Patentverwertung GBR, 76829 Landau (DE)
(72) Erfinder: Philipp, Martin, 56124 Mainz (DE)
(74) Vertreter: Kesselhut, Wolf

(56) Entgegenhaltungen:
- EP-A1- 2 343 179
- WO-A1-00/73692
- WO-A2-2012/065698

## Beschreibung

Die Erfindung betrifft einen Auskleidungsschlauch mit einem Innenfolienschlauch zur Auskleidung von Rohrleitungen und ein Verfahren zur fortlaufenden Herstellung eines solchen gemäß dem Oberbegriff von Anspruch 1 und 7.

Auf dem Gebiet der grabenlosen Sanierung von defekten Rohrleitungen, wie z.B. defekten Abwasserleitungen oder Abwasserkanälen, werden zunehmend Auskleidungsschläuche eingesetzt, die als "Inliner" bezeichnet werden und aus einem Fasermaterial, insbesondere aus Glasfasergewebe, bestehen, welches mit einem flüssigen Reaktionsharz getränkt ist, das nach dem Einziehen des Auskleidungsschlauchs in die Rohrleitung und Expandieren desselben mit Hilfe von Druckluft durch Licht einer Strahlungsquelle ausgehärtet wird. Ein solcher Auskleidungsschlauch sowie ein Verfahren zur Herstellung eines solchen sind beispielsweise aus der WO-A 00/73692 bekannt, wobei der dort beschriebene Auskleidungsschlauch einen Innenfolienschlauch mit einer aufkaschierten Vliesschicht besitzt, auf den die harzgetränkten Faserbänder auf einem Wickeldorn überlappend aufgewickelt werden. Da das Zusammenschweißen der mit der Vliesschicht kaschierten Folie sehr schwer möglich ist, schlägt die Schrift vor, die Vliesschicht zur Fertigung des Innenfolienschlauchs im Bereich der Längsränder zu entfernen und die Längsränder anschließend überlappend miteinander zu verbinden. Obgleich die Schrift eine Vorrichtung zum schraubenförmigen Aufwickeln eines mit einer aufkaschierten Vliesschicht versehenen Außenfolienschlauchs zeigt, gibt die Schrift keinen Hinweis auf eine Vorrichtung zum fortlaufenden Erzeugen des Innenfolienschlauchs, auf dem eine Vliesschicht angeordnet ist, die mit harzgetränkten Faserbändern umwickelt wird.

Weiterhin ist es aus der EP 0 100 029 Al bekannt, den für einen Auskleidungsschlauch verwendeten Innenfolienschlauch durch Aufbringen einer nicht-thermoplastischen sowie einer darauf angeordneten thermoplastischen Polyurethanharnstoffbeschichtung auf einen bahnförmigen textilen Werkstoff in Form eines Polyestervlieses zu erzeugen und die Längsränder der Folie miteinander zu vernähen. Die Naht wird anschließend durch einen thermisch verschweißbaren oder ggf. auch verklebbaren Folienstreifen abgedichtet. Die Schrift gibt keinen Hinweis darauf, wie das Verbinden der beiden Längsränder des beschichteten textilen Werkstoffs und das Aufbringen des Folienstreifens im Detail erfolgt.

Weiterhin ist aus der WO 2012/065698 der Anmelderin der vorliegenden Erfindung ein Verfahren und eine Vorrichtung zur Herstellung eines Auskleidungsschlauchs mit einem endlosen Innenfolienschlauch mit einer darauf aufkaschierten Vliesschicht bekannt, bei dem die Längsränder auf der Innenseite des Folienschlauchs im Überlappbereich durch ein aufgeklebtes oder aufgeschweißtes Folienband überdeckt werden. Obgleich durch das Folienband eine im Wesentlichen luftdichte Schweißnaht erhalten wird, die einen Austritt von Styroldämpfen aus der den Innenfolienschlauch umgebenden Lage aus harzgetränkten Faserbändern wirksam verhindert, erfordert das Aufschweißen des Folienbandes das Einbringen von zwei Schweißnähten, wodurch sich der Fertigungsaufwand erhöht und die Fertigungsgeschwindigkeit entsprechend verringert. Zudem vergrößert sich aufgrund der zwei einzubringenden Schweißnähte die Gefahr von Undichtigkeiten, was das Risiko für einen Austritt von Styroldämpfen durch die Schweißnähte vergrößert, und durch die zusätzliche Schweiß- oder Klebestelle erhöht sich zudem die Gefahr, dass die Intensität von UV-Licht, das zum Aushärten des Reaktionsharzes in den Faserbändern von Innen her durch eine Strahlungsquelle eingestrahlt wird, z.B. durch Lufteinschlüsse oder Fehlstellen in der Schweißnaht soweit geschwächt wird, dass das Reaktionsharz insbesondere auf der Außenseite des Auskleidungsschlauchs nicht mehr vollständig durchhärtet. Zudem besteht die Gefahr, dass sich durch die beim Schweißvorgang eingebrachte Wärmeenergie ebenfalls die Struktur der Vliesschicht auf der Außenseite des Innenfolienschlauchs verändert, wodurch eine zuverlässige an Haftung der Vliesschicht am Fasermaterial nicht mehr sichergestellt ist.

Demgemäß ist es eine Aufgabe der vorliegenden Erfindung, einen Auskleidungsschlauch mit einem Innenfolienschlauch und wenigstens einer auf diesem angeordneten Lage aus harzgetränktem Fasermaterial zu schaffen, welcher im Überlappungsbereich eine hohe Transparenz für den Durchtritt von UV- Licht sowie eine hohe Dichtigkeit gegen einen Austritt von Styroldämpfen bietet und der gleichzeitig auf seiner gesamten Außenseite mit einer Vliesschicht versehen ist, die eine vollumfängliche Anhaftung von Reaktionsharz auf der Außenseite des Auskleidungsschlauchs ermöglicht. Eine weitere Aufgabe der Erfindung besteht darin, ein Verfahren zu schaffen, mit welchem sich ein solcher Auskleidungsschlauch mit einer hohen Präzision und Fertigungsgeschwindigkeit herstellen lässt.

Diese Aufgaben werden erfindungsgemäß durch die Merkmale von Anspruch 1 und 7 gelöst.

Weitere Merkmale der Erfindung sind in den Unteransprüchen beschrieben.

Gemäß der Erfindung umfasst ein Auskleidungsschlauch zur Auskleidung von Rohrleitungen einen Innenfolienschlauch, auf dem wenigstens eine Lage aus Fasermaterial, insbesondere Faserbänder, angeordnet ist, die mit einem durch UV-Licht härtbaren Reaktionsharz getränkt sind. Die Faserbänder werden bevorzugt mithilfe einer Wickelvorrichtung auf den Innenfolienschlauch aufgewickelt, wie sie beispielsweise in der zuvor erwähnten WO 007/73692 oder WO 2012/065698 beschrieben ist. Der Innenfolienschlauch besteht dabei aus einer bahnförmigen Trägerfolie, die aus einem Styrol dichten und thermisch verschweißbaren Trägermaterial besteht, auf dessen den Faserbändern zugewandten Außenseite eine Schicht aus einem Vlieswerkstoff aufkaschiert ist. Der Vlieswerkstoff ist bevorzugt ein thermoplastischer Werkstoff, insbesondere ein Polyestervlies. Es ist jedoch ebenfalls denkbar, anstelle eines Polyestervlieses ein Glasfaservlies oder auch einen Vlieswerkstoff aus einem anderen geeigneten Material zu verwenden. Die beiden Randabschnitte des bahnförmigen Trägermaterials sind in einem Überlappungsbereich, der sich über die gesamte Länge des Innenfolienschlauchs hinweg erstreckt, in der Weise thermisch miteinander verschweißt, dass die aufkaschierte Vliesschicht auf der Außenseite des Innenfolienschlauchs angeordnet ist, wohingegen die bevorzugt glatte Seite der Trägerfolie auf der Innenseite des Innenfolienschlauchs verläuft. Das Trägermaterial ist vorzugsweise eine Mehrschicht-Folie die eine PE-Schicht, eine PA-Schicht und eine auf der PA-Schicht angeordnete weitere PE-Schicht aufweist, auf welch Letztere die Schicht aus Vlieswerkstoff aufkaschiert ist. Die Dicke des Trägermaterials mit der aufkaschierten Vliesschicht kann beispielsweise 220 µm betragen, wovon z.B. 40 µm auf die Vliesschicht und jeweils ca. 60 µm auf die die beiden PE-Schichten sowie die dazwischen angeordnete PA-Schicht, welche die Styroldichtheit des Trägermatermaterials gewährleistet, entfallen.

Der erfindungsgemäße Auskleidungsschlauch zeichnet sich dadurch aus, dass die Vliesschicht auf der Außenseite des radial innen liegenden Randabschnitts im Überlappungsbereich thermisch mit dem Trägermaterial an der Unterseite des radial außen liegenden Randabschnitts verschweißt ist, und dass die radial außen liegende Außenseite des Überlappungsbereichs eine Struktur aufweist, die ein dauerhaftes Anhaften von Reaktionsharz; insbesondere UP-Harz, ermöglicht.

Die Struktur kann beispielsweise während des Schweißvorgangs in das erwärmte, bzw. angeschmolzene Vliesmaterial eingebracht werden, oder alternativ auch dadurch erhalten werden, dass die Struktur des ursprünglichen Vlieswerkstoffs während des Schweißvorgangs durch besondere Maßnahmen, wie beispielsweise eine Kühlung, nicht oder nur unwesentlich verändert wird.

Bei der bevorzugten Ausführungsform der Erfindung entspricht die Struktur auf der Außenseite des Überlappungsbereichs im Wesentlichen der Struktur der Vliesschicht auf der Außenseite des Trägermaterials, wodurch sich der Vorteil ergibt, dass zwischen dem Trägermaterial und der Lage aus Fasermaterial nach dem Aushärten des Reaktionsharzes über den gesamten Innenfolienschlauch hinweg eine homogene Haftverbindung besteht, welche den Innenfolienschlauch über das Reaktionsharz dauerhaft mit dem Fasermaterial verbindet. Hierdurch wird die Gefahr eines Abschälens oder Ablösens des Innenfolienschlauchs beim Spülen des Auskleidungsschlauchs mit einem Hochdruckstrahl zuverlässig verhindert.

Die eingebrachte Struktur ist bevorzugt eine geprägte Struktur, die mithilfe eines walzenförmigen Prägewerkzeugs in die Vliesschicht auf der Außenseite des Trägermaterials eingebracht wird, nachdem die beiden Längsränder desselben übereinander geführt werden. Hierdurch ergibt sich der Vorteil, dass die Struktur durch einen entsprechenden Austausch des walzenförmigen Prägewerkzeugs in kürzester Zeit gegen eine andere Struktur ausgetauscht werden kann, um beispielsweise einen Auskleidungsschlauch mit einem anderen Aufbau oder einer anderen Art von Innenfolienschlauch bzw. Vliesschicht zu erzeugen.

Bei der bevorzugten Ausführungsform der Erfindung besitzt der Überlappungsbereich eine Breite im Bereich von 5 mm bis 15 mm, insbesondere 8 mm bis 12 mm und besonderes bevorzugt 11 mm, was sich in von der Anmelderin durchgeführten Testversuchen als optimaler Kompromiss zwischen einer hinreichenden dauerhaften Styroldichtheit der Schweißverbindung und einer möglichst homogenen gleichmäßigen Transparenz der Schweißverbindung herausgestellt hat. Letztere ist deshalb von besonderer Bedeutung, da mit zunehmend der Breite des Überlappungsbereichs mehr thermische Energie in den Überlappungsbereich eingebracht werden muss, um das Kunststoffmaterial zu verflüssigen. Hierdurch steigt jedoch ebenfalls die Gefahr, dass im verflüssigten Kunststoffmaterial Lufteinschlüsse entstehen, die dazu führen, dass das zur Aushärtung des Reaktionsharzes eingestrahlte UV-Licht gestreut wird und hierdurch im fertigen Auskleidungsschlauch zu Fehlstellen führt, in denen das Reaktionsharz auf der Außenseite des Auskleidungsschlauchs nicht vollständig durchgehärtet ist. Wird hingegen die Breite des Überlappungsbereichs zu klein gewählt, so besteht die Gefahr, dass gesundheitsschädliche Styroldämpfe aus dem Reaktionsharz durch die Schweißnaht hindurch in den Innenraum des Auskleidungsschlauchs und von dort aus in die Umwelt gelangen. Hinzu kommt, dass das Styrol die Schweißnaht schädigt, so dass diese bei einer zu geringen Breite nicht mehr luftdicht ist und der Auskleidungsschlauch dann nach dem Einziehen in einen zu sanierenden Kanal nicht mehr in der gewünschten Weise aufgeblasen werden kann, bzw. beim Aufblasen Luft in das Fasermaterial eindringt und die notwendige Kompression verhindert. Außerdem kann durch das Entweichen von Styrol durch die Schweißnaht hindurch im Innenraum des Auskleidungsschlauchs ein explosives Gemisch entstehen, welches sich beim Einschalten der UV-Lampen der zum Aushärten des Reaktionsharzes eingesetzten Strahlungsquelle leicht entzünden kann.

Nach einem weiteren der Erfindung zu Grunde liegenden Gedanken wird die Wärmeenergie zum Verschweißen des Vlieswerkstoffs mit dem thermisch verschweißbaren Trägermaterial in einer solchen Größe gesteuert eingebracht, dass zwischen den überlappenden Randabschnitten eine Lage aus homogenisiertem geschmolzenem Vliesmaterial angeordnet ist, welche die Ränder der Folienbahn im Überlappungsbereich verbindet. Hierzu wird bevorzugter Weise ein Vliesmaterial eingesetzt, welches bei vergleichsweise niedrigen Temperaturen von beispielsweise ca. 130 bis 145 °C oder weniger schmilzt. Hierdurch ergibt sich der Vorteil, dass der Vlieswerkstoff selbst vollständig angeschmolzen und im Wesentlichen homogen verflüssigt wird, was zu einer guten Transparenz der erzeugten Schweißverbindung für sichtbares Licht sowie auch für das eingesetzte UV-Licht zum Aushärten des Reaktionsharzes führt.

Gemäß einer weiteren Ausführungsform der Erfindung kann das Trägermaterial auf der der Vliesschicht gegenüberliegenden Seite eine weitere Lage aus einem thermisch verschmelzbaren Kunststoffmaterial, insbesondere Polyethylen, aufweisen, welches eine 0,5 bis 3-fach so große Dicke, insbesondere 0,75 bis 2-fach bevorzugt 1,25 bis 1,6-fach so große Dicke wie die Vliesschicht besitzt. Hierdurch ergibt sich der Vorteil, dass Vliesmaterial wie z.B. Polyestervlies oder auch Glasfaservlies mit einer gegenüber dem PE-Werstoff vergleichsweise hohen Schmelztemperatur von z.B. ca. 130 °C oder mehr eingesetzt werden kann, welches beim Schweißvorgang nicht vollständig verflüssigt wird. Dies ist darauf zurück zu führen, dass der bei niedrigeren Temperatur schmelzende PE-Werkstoff während des Schweißvorgangs in diesem Falle vollständig verflüssigt wird und in die Vliesschicht eindringt und diese durchtränkt, wodurch sich nach dem Erkalten des Materials ebenfalls eine hohe Transparenz und Homogenität der Schweißverbindung ergibt.

Um hierbei die Gefahr von möglichen Lufteinschlüssen weiter zu reduzieren, wird der Überlappungsbereich während und/oder nach der Verflüssigung des Kunststoffmaterials beiderseits mit einer Druckkraft beaufschlagt, welche die Vliesschicht mit dem darin aufgenommenen verflüssigten Kunststoffmaterial zusammen drückt und dadurch komprimiert. Die Druckkraft wird bevorzugt durch den nachfolgend noch näher beschriebenen walzenförmigen Ultraschallerzeuger sowie das an diesen angestellte ebenfalls walzenförmige umlaufende Prägewerkzeug erzeugt, zwischen denen die beiden überlappenden Randabschnitte des bahnförmigen Trägermaterials hindurch geführt werden.

Nach einem weiteren der Erfindung zugrunde liegenden Gedanken, wird bei dem erfindungsgemäßen Verfahren zur fortlaufenden Herstellung eines endlosen Innenfolienschlauchs für einen zuvor beschriebenen Auskleidungsschlauch ein bahnförmiges, thermisch verschweißbaren Trägermaterial, das auf seiner Außenseite eine aufkaschierte Lage aus Vlieswerkstoff aufweist, im Bereich der Randabschnitte des bahnförmigen Trägermaterials übereinander geführt und in dem entstehenden Überlappungsbereich thermisch miteinander verschweißt, wobei in die radial außen liegende Vliesschicht über dem Überlappungsbereich während des thermischen Verschweißens eine Struktur eingebracht oder die Struktur der Vliesschicht auf der Außenseite des radial außen liegenden Randabschnitts in einer solchen Weise aufrecht erhalten wird, dass das Reaktionsharz auf der Außenseite des Überlappungsbereichs nach dem Aushärten des Reaktionsharzes dauerhaft an dem Fasermaterial anhaftet. Hierbei wird die eingebrachte Struktur derart gewählt, dass die Ablösekräfte/Abschälkräfte für das Trägermaterial nach dem Aushärten des Reaktionsharzes im Überlappungsbereich im Wesentlichen die gleiche Größe aufweisen, wie die Ablösekräfte im übrigen Bereich der Vliesschicht auf der Außenseite des Trägermaterials, bzw. des fertig gestellten Innenfolienschlauchs.

Die Struktur wird bei einer bevorzugten Ausführungsform der Erfindung in vorteilhafter Weise während des Schweißvorgangs eingebracht, wodurch sich in Verbindung mit einem eingesetzten Prägewerkzeug der Vorteil ergibt, dass lediglich geringe Andruckkräfte benötigt werden, das der Vlieswerkstoff auf der Außenseite durch die eingebrachte thermische Energie bereits vorgewärmt ist.

Gemäße einer alternativen Ausführungsform der Erfindung wird die Struktur dadurch erzeugt, dass die Vliesschicht auf der Außenseite des Überlappungsbereichs aktiv gekühlt wird, was z.B. durch eine entsprechend mit Kühlluft beaufschlagtes umlaufendes walzenförmiges Prägewerkzeug erfolgen kann, welches an den ebenfalls umlaufenden Ultraschallerzeuger oder auch ein beheiztes umlaufendes Walzenelement auf der dem Vlieswerkstoff gegenüber liegenden Seite des Trägermaterials angestellt wird. Die Oberfläche des umlaufenden walzenförmigen Ultraschallerzeugers, bzw. des beheizten Walzenelementes kann hierbei mit einer zur Struktur des Prägewerkzeugs korrespondierenden inversen Struktur versehen sein, so dass das Walzenelement als Matrize für den Prägevorgang dient.

Ferner wird bei der bevorzugten Ausführungsform der Erfindung die thermische Schweißenergie zum Verbinden der Kontaktflächen der Folienränder im Überlappungsbereich vorzugsweise durch eine elektronische Steuerungseinrichtung gesteuert von der der Vliesschicht gegenüberliegenden Seite des Trägermaterials aus gezielt in einer solchen Größe in den Überlappungsbereich eingebracht, dass lediglich die Vlieslage im Bereich der Kontaktfläche des Überlappungsbereichs im Wesentlichen vollständig verflüssigt und homogenisiert wird, wohingegen die Vlieslage auf der Außenseite des Überlappungsbereichs im Wesentlichen unverändert verbleibt. Die elektronische Steuerungseinrichtung steuert dabei sowohl die Geschwindigkeit, mit der das bahnförmige Trägermaterial durch die Schweißeinrichtung hindurch bewegt wird, als auch die Intensität der eingebrachten Ultraschallenergie, bzw. thermischen Energie, sowie ggf. auch die Menge und/oder die Temperatur der Kühlluft.

Um hierbei sicher zu stellen, dass die Folienränder in der gewünschten Lage übereinander positioniert werden, hat es sich als vorteilhaft heraus gestellt, wenn diese vor dem Übereinanderführen durch schräg zur Bewegungsrichtung der Folienränder umlaufende Bürsten gegen einen jeweiligen Längsanschlag gedrängt werden.

Schließlich kann es vorgesehen sein, dass die Vliesschicht im Bereich des einen Randabschnitts einen niedrigeren Schmelzpunkt aufweist, als die Vliesschicht im Bereich des anderen Randabschnitts des bahnförmigen Trägermaterials, derart, dass nach dem Übereinanderführen der beiden Randabschnitte die Vliesschicht mit niedrigerem Schmelzpunkt an der Unterseite des Trägermaterials des oberen Randabschnitts anliegt, der auf der Außenseite des Innenfolieschlauchs angeordnet ist. Hierdurch ergibt sich der Vorteil, dass sich die Vliesschicht zwischen den Randabschnitten im Überlappungsbereich mit einem geringeren Einsatz von thermischer Energie vollständig verflüssigen lässt, wohingegen die Vliesschicht mit höherem Schmelzpunkt auf der Außenseite des Innenfolienschlauchs ihre Struktur gegebenenfalls auch ohne zusätzliche Kühlung oder sonstige Maßnahmen in der ursprünglichen Form währen des Schweißvorgangs beibehält.

Die Erfindung wird nachfolgend mit Bezug auf die Zeichnungen anhand von bevorzugten Ausführungsformen beschrieben.

In den Zeichnungen zeigen:
- Fig. 1: eine schematische Querschnittsansicht des Auskleidungsschlauchs im Überlappungsbereich,
- Fig. 2: eine schematische räumliche Aufsicht auf das walzenförmige Prägewerzeug einer Schweißeinrichtung während des Verschweißens der überlappenden Randabschnitte des Innenfolienschlauchs, und
- Fig. 3: eine schematische Querschnittsansicht einer Schweißeinrichtung mit angedeutetem Trägermaterial während des Schweißvorgangs.

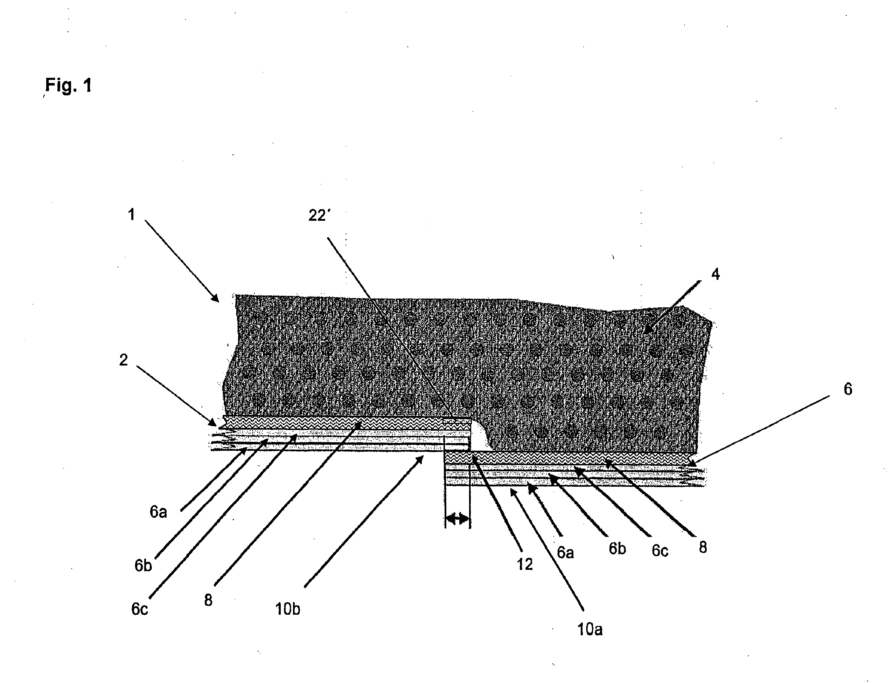

Wie in der Darstellung von Fig. 1 gezeigt ist, umfasst ein Auskleidungsschlauch 1 einen Innenfolienschlauch 2, auf dem wenigstens eine Lage aus Fasermaterial 4, insbesondere aus Faserbändern, angeordnet ist, das mit einem durch UV-Licht härtbaren Reaktionsharz getränkt ist. Die Faserbänder werden bevorzugt mithilfe einer Wickelvorrichtung auf den Innenfolienschlauch aufgewickelt, wie sie beispielsweise in der zuvor erwähnten WO 007/73692 oder WO 2012/065698 beschrieben ist.

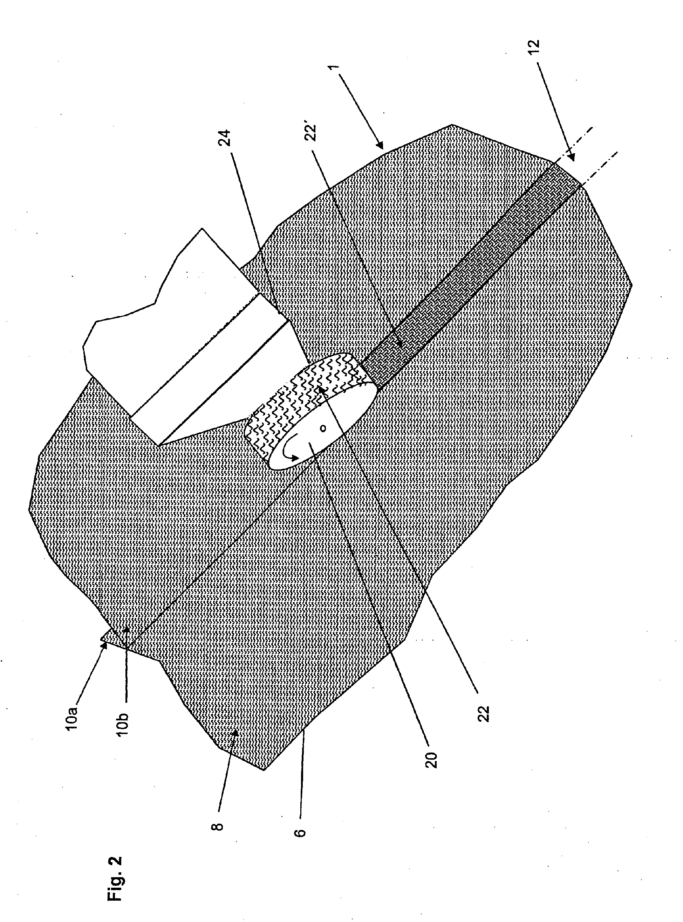

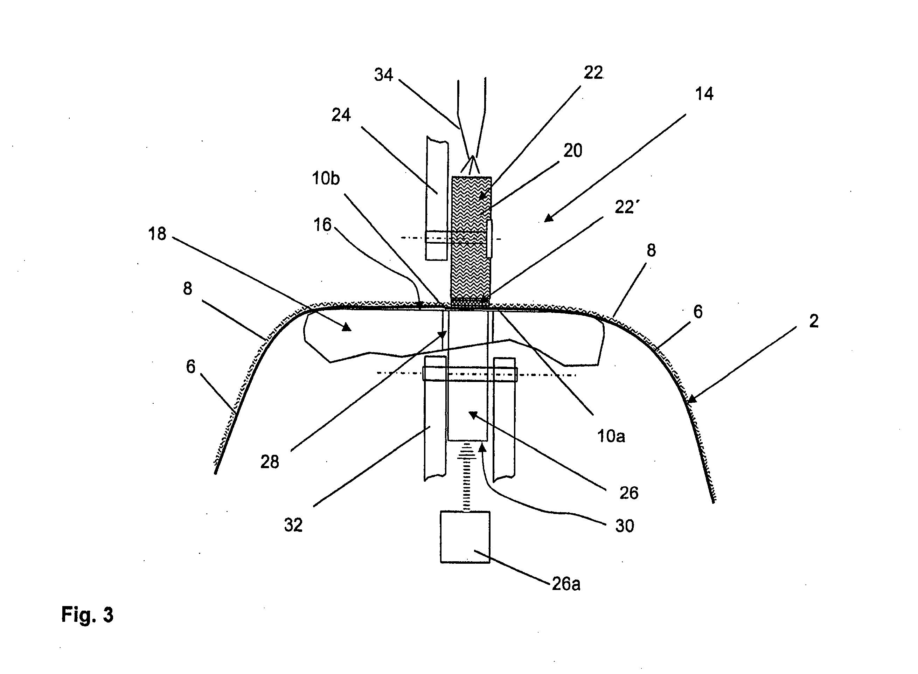

Wie in der Darstellung von Fig. 2 und 3 angedeutet ist, wird der Innenfolienschlauch 2 aus einer bahnförmigen Trägerfolie 6 gefertigt, die ein styroldichtes Trägermaterial umfasst, dass gemäß der Darstellung von Figur 1 eine radial innenliegende erste Polyethylenschicht (PE-Schicht) 6a, eine darauf aufgebrachte Polyamidschicht (PA-Schicht) 6b und eine auf der PA-Schicht aufgebrachte weitere Polyethylenschicht (PE-Schicht) 6c umfasst, auf welch Letztere die Vliesschicht 8 aufkaschiert ist. Der Vlieswerkstoff, d.h. der Werkstoff der Vliesschicht 8, ist bevorzugt ein thermoplastischer Werkstoff, insbesondere ein Polyestervlies, welches eine Dicke von bevorzugt 30 bis 40 Mikrometern, bzw. ein Flächengewicht von 40g/m² besitzt.

Wie der Darstellung von Fig. 1 und 2 weiterhin entnommen werden kann, sind die beiden Randabschnitte 10a und 10b des bahnförmigen Trägermaterials 6 in einem Überlappungsbereich 12, der sich über die gesamte Länge des Innenfolienschlauchs 2 hinweg erstreckt und eine Breite von bevorzugt 8 - 12 mm aufweist, übereinander geführt, so dass die Vliesschicht 8 auf der Außenseite des unteren, radial innen liegenden Randabschnitts 10a über der radial innen liegenden PE-Schicht 6a des oberen, radial außen liegenden zweiten Randabschnitts 10b angeordnet ist.

Um die beiden Randabschnitte 10a und 10b der bahnförmigen Trägerfolie 6 übereinander zu führen, wird diese beispielsweise von einer Rolle abgerollt und über eine erste und zweite, nicht näher gezeigte Formschulter an ebenfalls nicht näher dargestellte Längsanschläge geführt, wie dies beispielsweise in der WO 2012/065698 beschrieben ist.

Nach dem Übereinanderführen des ersten und zweiten Randabschnitts 10a, 10b werden diese einer thermischen Schweißeinrichtung 14 zugeführt, welche schematisch in den Figuren 2 und 3 gezeigt ist. Gemäß der Darstellung der Figur 2 umfasst die thermische Schweißeinrichtung 14 eine bevorzugt horizontal verlaufende Führungsfläche 16, die beispielsweise Teil eines Wickeldorns 18 einer Wickelvorrichtung sein kann, wie sie beispielsweise in der zuvor genannten WO-Schrift beschrieben ist. Oberhalb der Führungsfläche 16 ist ein rollenförmiges Prägewerkzeug 20 angeordnet, das auf seiner Außenseite eine Struktur 22 aufweist, die wechselweise erhabene- und zurückversetzte Bereiche besitzt. Das rollenförmige Prägewerkzeug 20, das vorzugsweise als ein austauschbares Ambossrad ausgestaltet ist, kann beispielsweise an einem Haltearm 24 drehbar gelagert sein, welcher sich an einem nicht näher gezeigten gestellsfesten Gehäuseteil der Wickelvorrichtung oder einem sonstigen gestellsfesten Bauteil abstützt.

Dem rollenförmigen Prägewerkzeug 20 gegenüberliegend ist auf der Unterseite der Führungsfläche 16 ein umlaufender rollenförmiger Ultraschallerzeuger 26 angeordnet, welcher sich durch eine schlitzförmige Öffnung 28 in der Führungsfläche 16 hindurch mit seiner Umfangsoberfläche 30 bis in Höhe der Führungsfläche 16 erstreckt. Der umlaufende rollenförmige Ultraschallerzeuger 26 ist vorzugsweise frei drehbar an einem weiteren Haltearm 32 aufgenommen, der sich bevorzugt im Inneren des Wickeldorns 18 an diesem abstützt. Wie der Darstellung der Figur 3 hierbei weiterhin entnommen werden kann, ist der rollenförmige Ultraschallerzeuger mit einem schematisch angedeuteten Ultraschallgenerator 26a verbunden, der die Ultraschallenergie erzeugt und in den rollenförmigen Ultraschallerzeuger 26 eingekoppelt, wie dies durch den gestrichelt eingezeichneten Pfeil angedeutet ist. Von diesem aus wird die Ultraschallenergie von unten her in den Überlappungsbereich 12 eingeleitet. Durch die eingeleitete Ultraschallenergie wird das im Überlappungsbereich 12 zwischen der PE-Schicht 6a und der PE-Schicht 6c angeordnete Vliesmaterial 8 des unteren Randabschnitts 10a in hochfrequente Schwingungen versetzt und durch die entstehende Reibungshitze soweit erwärmt, bis das thermoplastische Kunststoffmaterial der PE-Schicht 6c schmilzt, sich verflüssigt und in das Vliesmaterial 8 eindringt.

Hierbei lässt sich vorzugsweise durch nicht näher gezeigte federelastische Mittel die Andruckkraft zwischen der Umfangsoberfläche 30 des Ultraschallerzeugers 26 und der mit der Struktur 22 versehenen Umfangsoberfläche des rollenförmigen Prägewerkzeugs 20 verändern, was in vorteilhafter Weise auch über einen nicht näher gezeigten elektrisch betätigten Aktuator erfolgen kann. Durch das Zusammenwirken des Prägewerkzeugs 20 mit dem umlaufenden rollenförmigen Ultraschallerzeuger 26, der vorzugsweise eine glatte ebene Oberfläche besitzt, um die Ultraschallenergie besser in den Überlappungsbereich einkoppeln zu können, wird auf der Außenseite des oberen Längsabschnitts 10b eine zur Struktur 20 korrespondierende Struktur 22' erzeugt, die bevorzugt ähnlich der Struktur der ursprünglichen Vliesschicht 8 ist, wie dies in Fig. 2 und 3 angedeutet ist.

Um alternativ die Möglichkeit zu schaffen, dass die ursprüngliche Struktur 22'der Vliesschicht auf der Außenseite des oberen Randabschnitts 10b trotz der eingebrachten thermischen Energie beibehalten wird, kann es weiterhin vorgesehen sein, dass dem rollenförmigen Prägewerkzeug 20 zusätzlich oder alternativ eine Kühleinrichtung 34 zugeordnet ist, beispielsweise eine in Fig. 3 angedeutete Blasdüse, die das Prägewerkzeug 20 oder die Außenseite des Überlappungsbereichs 12 zusätzlich mit gekühlter Luft beaufschlagt, um ein Anschmelzen der Vlieslage 8 auf der Außenseite des Überlappungsbereichs 12 zu verhindern. Hierdurch wird erreicht, dass lediglich die Polyethylen Schicht 6a des oberen Randabschnitts 10b durch die eingebrachte Ultraschallenergie verflüssigt wird, wohingegen die Vliesschicht 8 auf der Außenseite des Innenfolienschlauchs 2 im Überlappungsbereich 12 durch das kühlere umlaufende Prägewerkzeug 20, bzw. die Kühleinrichtung aktiv gekühlt und hierdurch ein Anschmelzen des Vlieswerkstoffs 8 sowie der darunter liegenden Polyethylenschicht 6c verhindert wird. Aufgrund der vollständigen Verflüssigung der Polyethylenschicht 6a des oberen Randabschnitts 10b im Überlappungsbereich 12 wird das Vliesmaterial 8 in diesem Bereich vollständig durchtränkt, so dass nach dem Erkalten des verflüssigten Kunststoffinaterials eine hochfeste und luftdichte thermische Schweißverbindung erhalten wird, die im Wesentlichen homogen und für das zum Aushärten des Reaktionsharzes eingesetzte UV-Licht sowie auch für sichtbares Licht transparent ist.

Es versteht sich, dass anstelle eines Ultraschallerzeugers 26 ebenfalls ein beheiztes rollenförmiges Element einsetzbar ist, welches in gleicher Weise an das umlaufende rollenförmigen Prägewerkzeug 12 mit einer vorgegebenen Andruckkraft anstellbar ist, um die styroldichte Schweißnaht im Überlappungsbereich 12 unter gleichzeitiger Beibehaltung einer Struktur 22' oder Erzeugung einer Struktur 22'auf der Außenseite der Vliesschicht 8 fortlaufend zu erzeugen.

In der zuvor beschriebenen Weise lässt sich ein endloser Innenfolienschlauch 2 erzeugen, der in einer nachgeordneten Wickelvorrichtung mit dem harzgetränktem Fasermaterial 4 umwickelt, bzw. um den herum eine Lage aus Fasermaterial 4 durch ein Herumlegen und ggf. randseitiges Vernähen von Filz- oder Glasfasermatten erzeugt werden kann, die ggf. in einem sich anschließenden Verfahrensschritt mit Reaktionsharz getränkt werden.

Obgleich das Einbringen der Ultraschallenergie bei der in den Figuren 2 und 3 gezeigten Ausführungsform bevorzugt von der Innenseite des Innenfolienschlauchs 2 aus erfolgt, ist es ebenfalls möglich, den Ultraschallerzeuger 26 auf der Außenseite des Innenfolienschlauchs 2, d.h. auf der Seite der Vliesschicht 8 zu positionieren und das rollenförmige Prägewerkzeug/Ambossrad 20 auf der Innenseite des Innenfolienschlauchs, bevorzugt innerhalb des in Fig. 3 gezeigten Wickeldorns 18 unterhalb der Führungsfläche 16 zu positionieren.

### Bezugszeichenliste

- 1: erfindungsgemäßer Auskleidungsschlauch
- 2: Innenfolienschlauch
- 4: Fasermaterial
- 6: bahnförmige Trägerfolie
- 6a: PE-Schicht
- 6b: PA-Schicht
- 6c: PE-Schicht
- 8: Vliesschicht
- 10a: unterer Randabschnitt
- 10b: oberer Randabschnitt
- 12: Überlappungsbereich
- 14: Ultraschall-Schweißeinrichtung
- 16: Führungsfläche
- 18: Wickeldorn
- 20: rollenförmiges Prägewerkzeug/Ambossrad
- 22: Struktur auf der Außenseite des Prägewerkzeugs
- 22': Struktur auf der Außenseite des oberen Randabschnitts im Überlappungsbereich
- 24: Haltearm
- 26: rollenförmiger Ultraschallerzeuger
- 26a: Ultraschallgenerator
- 28: schlitzförmige Öffnung
- 30: Umfangsoberfläche des rollenförmigen Ultraschallerzeugers
- 32: Haltearm des Ultraschallerzeugers
- 34: Kühleinrichtung

## Patentansprüche

1. Auskleidungsschlauch (1) zur Auskleidung von Rohrleitungen, der einen Innenfolienschlauch (2) und eine auf dem Innenfolienschlauch (2) angeordnete Lage aus Fasermaterial (4) umfasst, welches mit einem durch UV-Licht härtbaren Reaktionsharz getränkt ist, wobei der Innenfolienschlauch (2) ein styroldichtes, thermisch verschweißbares Trägermaterial (6, 6a, 6b, 6c) enthält, das auf seiner dem Fasermaterial (4) zugewandten Außenseite eine aufkaschierte Vliesschicht (8) aufweist und das einen sich entlang des Innenfolienschlauchs (12) erstreckenden Überlappungsbereich (12) umfasst, in welchem die Randabschnitte (10a, 10b) des Trägermaterials (6, 6a, 6b, 6c) thermisch miteinander verschweißt sind,
**dadurch gekennzeichnet,**
**dass** die Vliesschicht (8) auf der Außenseite des radial innen liegenden unteren Randabschnitts (10a) im Überlappungsbereich (12) thermisch mit dem Trägermaterial (6a) an der Unterseite des radial außen liegenden oberen Randabschnitts (10b) verschweißt ist, und dass der radial außen liegende obere Randabschnitt (10b) im Überlappungsbereich auf seiner Außenseite eine Struktur (22) aufweist, welche ein dauerhaftes Anhaften von Reaktionsharz ermöglicht.

2. Auskleidungsschläuch nach Anspruch 1,
**dadurch gekennzeichnet,**
**dass** die Struktur (22') im Wesentlichen der Struktur der Vliesschicht (8) auf der Außenseite des Trägermaterials (6, 6a, 6b, 6c) entspricht.

3. Auskleidungsschlauch nach Anspruch 1 oder 2,
**dadurch gekennzeichnet,**
**dass** die Struktur (22') eine geprägte Struktur ist.

4. Auskleidungsschlauch nach einem der vorhergehenden Ansprüche,
**dadurch gekennzeichnet,**
**dass** der Überlappungsbereich (12) eine Breite im Bereich von 5 mm bis 15 mm, insbesondere 8 mm bis 12 mm und besonderes bevorzugt 11 mm besitzt.

5. Auskleidungsschlauch nach einem der vorhergehenden Ansprüche,
**dadurch gekennzeichnet,**
**dass** zwischen den überlappenden Randabschnitten (10a, 10b) eine Lage aus homogenisiertem geschmolzenem Vliesmaterial (8) angeordnet ist, welche die Randabschnitte (10a, 10b) des bahnförmigen Trägermaterials (6) im Überlappungsbereich (12) miteinander verbindet.

6. Auskleidungsschlauch nach einem der vorhergehenden Ansprüche,
**dadurch gekennzeichnet,**
**dass** das Trägermaterial (6) auf der der Vliesschicht (8) gegenüberliegenden Seite eine weitere Lage (6a) aus einem thermisch verschmelzbaren Kunststoffmaterial, insbesondere Polyethylen aufweist, welches eine größere Dicke als die Vliesschicht (8) besitzt, und dass im Überlappungsbereich (12) eine im Wesentlichen homogene Lage aus Vliesmaterial und darin aufgenommenem weiterem Kunststoffmaterial angeordnet ist, welche die Verbindung zwischen den Randabschnitten (10a, 10b) bewirkt.

7. Verfahren zur fortlaufenden Herstellung eines endlosen Innenfolienschlauchs (2) für einen Auskleidungsschlauch (1) nach einem der vorhergehenden Ansprüche, aus einem bahnförmigen, thermisch verschweißbaren Trägermaterial (6), das auf seiner Außenseite eine aufkaschierte Vliesschicht (8) aufweist, wobei die Randabschnitte (10a, 10b) des bahnförmigen Trägermaterials (6) übereinander geführt und in einem Überlappungsbereich (12) thermisch miteinander verschweißt werden,
**dadurch gekennzeichnet,**
**dass** in den Überlappungsbereich (12) während des thermischen Verschweißens der beiden Randabschnitte (10a, 10b) des bahnförmigen Trägermaterials (6) eine Struktur (22') eingebracht oder die Struktur (22') der Vliesschicht (8) auf der Außenseite des radial außen liegenden oberen Randabschnitts (1 0b) in einer solchen Weise aufrecht erhalten wird, dass das Reaktionsharz im Überlappungsbereich (12) dauerhaft anhaftbar ist.

8. Verfahren nach Anspruch 7,
**dadurch gekennzeichnet,**
**dass** die Struktur (22') während des Schweißvorgangs eingebracht wird.

9. Verfahren nach Anspruch 8,
**dadurch gekennzeichnet,**
**dass** die Struktur (22') durch Kühlen der nach dem Übereinanderführen der Randabschnitte (10a, 10b) des Trägermaterials (6) radial außen liegenden Vliesschicht (8) während des Schweißvorgangs aufrecht erhalten wird.

10. Verfahren nach einem der Ansprüche Anspruch 7 bis 8,
**dadurch gekennzeichnet,**
**dass** die Struktur (22') durch einen Prägevorgang in die Außenseite des radial außen liegenden oberen Randabschnitts (10b) des Überlappungsbereichs eingebracht wird.

11. Verfahren nach Anspruch 10,
**dadurch gekennzeichnet,**
**dass** das Einbringen der Struktur (22') durch ein umlaufendes rollenförmiges, bevorzugt gekühltes Prägewerkzeug (20) erfolgt.

12. Verfahren nach Anspruch 11,
**dadurch gekennzeichnet,**
**dass** dem umlaufenden rollenförmige Prägewerkzeug (20) während des Schweißvorgangs ein ebenfalls umlaufender Ultraschallerzeuger (26) zugeordnet ist, der Ultraschallenergie bevorzugt von der der Vliesschicht (8) gegenüberliegenden Seite des Trägermaterials (6) aus in den Überlappungsbereich (12) einkoppelt.

13. Verfahren nach einem der Ansprüche 7 bis 12,
**dadurch gekennzeichnet,**
**dass** die thermische Schweißenergie zum Verbinden der Randabschnitte (10a, 10b) im Überlappungsbereich (12) in einer solchen Größe eingebracht wird, dass die Vlieslage (8) und/oder das Kunststoffinaterial (6a) des radial außen liegenden oberen Randabschnitts (10b) und/oder das Kunststoffinaterial (6c) des radial innen liegenden unteren Randabschnitts (10a) im Überlappungsbereich (8) im Wesentlichen vollständig verflüssigt und homogenisiert wird, und die Vliesschicht (8) auf der Außenseite des radial außen liegenden Randabschnitts (10b) im Überlappungsbereich im Wesentlichen unverändert verbleibt.

14. Verfahren nach einem der Ansprüche 7 bis 13,
**dadurch gekennzeichnet,**
**dass** die Randabschnitte des bahnförmigen Trägermaterials (6) vor dem Übereinanderführen durch schräg zur Bewegungsrichtung der Randabschnitte umlaufende Bürsten gegen einen Längsanschlag gedrängt werden.

15. Verfahren nach einem der Ansprüche 7 bis 14,
**dadurch gekennzeichnet,**
**dass** die Vliesschicht (8) im Bereich des einen Randabschnitts (10a) einen niedrigeren Schmelzpunkt aufweist, als die Vliesschicht im Bereich des anderen Randabschnitts (10b) des bahnförmigen Trägermaterials (6), derart, dass nach dem Übereinanderführen der beiden Randabschnitte (10a, 10b) die Vliesschicht (8) mit niedrigerem Schmelzpunkt an der Unterseite des Trägermaterials (6) des radial außen liegenden oberen Randabschnitts (10b) anliegt.

## Claims

1. A tubular liner (1) for relining pipelines comprising an inner tubular film (2) and a layer of fiber material (4) located on the inner tubular film (2) which is impregnated with a reactive resin that is curable under UV-light, wherein the inner tubular film (2) contains a styrene-proof thermally weldable carrier material (6, 6a, 6b, 6c) which comprises a laminated non-woven layer (8) disposed on the outer side of the carrier material facing the fiber material, and which comprises an overlapping region (12) extending along the inner tubular film (12) in which the edge sections (10a, 10b) of the carrier material (6, 6a, 6b, 6c) are thermally welded to one another,
**characterized in that**
the non-woven layer (8) on the outer side of the radially inner lower edge section in the overlapping region (12) is thermally welded to the carrier material (6a) on the lower side of the radially outer upper edge section (10b) and **in that** the radially outer upper edge section (10b) in the overlapping region comprises a structure (22) on its outer side which enables a durable adhesion of reactive resin.

2. Tubular liner according to claim 1,
**characterized in that**
the structure (22') substantially corresponds to a structure of the non-woven layer (8) on the outer side of the carrier material (6, 6a, 6b, 6c).

3. Tubular liner according to claim 1 or 2,
**characterized in that**
the structure (22') is an embossed structure

4. Tubular liner according to one of the previous claims,
**characterized in that**
the overlapping region (12) has a width in a range from 5mm to 15mm, in particular 8mm to 12mm, and preferably 11 mm.

5. Tubular liner according to one of the previous claims,
**characterized in that**
a layer of homogenized molten non-woven material (8) is located between the overlapping edge sections (10a, 10b) which connects the edge sections (10a, 10b) of the web-shaped carrier material (6) to one another in the overlapping region (12).

6. Tubular linear according to one of the previous claims,
**characterized in that**
the carrier material (6) on its side facing away from the non-woven layer (8) has a further layer of a thermally fusible plastics material, in particular polyethylene, which has a greater thickness than the non-woven layer (8), and **in that** a substantially homogenous layer of non-woven material and further plastics material accommodated therein is located in the overlapping region (12), the substantially homogenous layer effecting the connection between the edge sections (10, 10b).

7. A method for the continuous manufacture of an endless inner tubular film (2) for a tubular liner (1) according to one of the previous claims from a web-shaped and thermally weldable carrier material (6) which on its outer side comprises a laminated non-woven layer (8), wherein the edge sections (10a, 10b) of the web-shaped carrier material (6) are superposed on one another and are thermally welded in an overlapping region (12),
**characterized in that**
during the thermal welding of the edge sections (10a, 10b) of the web-shaped carrier material (6), a structure (22') is applied to the overlapping region (12) or the structure (22') of the non-woven layer (8) on the outer side of the radially outer upper edge section (10b) is maintained in such a way that the reactive resin in the overlapping region (12) is caused to be durably adhesive.

8. Method according to claim 7,
**characterized in that**
the structure (22') is applied during welding.

9. Method according to claim 8,
**characterized in that**
the structure (22') is maintained by cooling the non-woven layer (8) during the welding operation which after superposing the edge sections (10a, 10b) is located on the radially outer side of the carrier material (6).

10. Method according to one of the claims 7 to 8,
**characterized in that**
a structure (22') is applied to the outer side of the radially outer edge section (10b) at the overlapping region by an embossing operation.

11. Method according to claim 10,
**characterized in that**
the structure (22') is applied by using a rotating, roller-shaped embossing tool, preferably a cooled embossing tool (20).

12. Method according to claim 11,
**characterized in that**
a rotating ultrasonic generator (26) is associated to the rotating roller-shaped embossing tool (20), which couples ultrasonic energy into the overlapping region (12), wherein the ultrasonic energy is preferably coupled to the overlapping region (12) from a side of the carrier material (6) which faces away from the non-woven layer (8).

13. Method according to any of the claims 7 to 12,
**characterized in that**
the thermal welding energy for connecting the edge sections (10a, 10b) in the overlapping region (12) is introduced on such a scale that the non-woven layer (8) and/or the plastics material (6a) of the radially outer upper edge section (10b) and/or the plastics material (6c) of the radially inner lower edge section (10a) in the overlapping region (8) is substantially completely liquefied and homogenized, and **in that** the non-woven layer (8) on the outer side of the radially outer edge section (10b) in the overlapping region remains substantially unchanged.

14. Method according to one of the claims 7 to 13,
**characterized in that**
the edge sections of the web-shaped carrier material (6), prior to the superpositioning thereof, are forced against a squaring fence by brushes which are rotating at an angle relative to the direction of movement of the edge sections.

15. Method according to one of the claims 7 to 14,
**characterized in that**
the non-woven layer (8) in the vicinity of one edge section (10a) comprises a lower melting point than the non-woven layer in the vicinity of the other edge section (10b) of the web-shaped carrier material (6), such that after superposing the two edge sections (10a, 10b) the non-woven layer (8) with the lower melting point is caused to lie against the lower side of the carrier material (6) of the radially outer upper edge section (10b).

## Revendications

1. Gaine (1) pour le revêtement de conduites, qui comprend un film intérieur tubulaire (2) et une couche, disposée sur le film intérieur tubulaire (2), d'un matériau fibreux (4) imprégné d'une résine réactive durcissable à la lumière UV, ledit film intérieur tubulaire (2) contenant un matériau support (6, 6a, 6b, 6c) imperméable au styrène et thermosoudable, qui présente, sur son côté extérieur orientée vers le matériau fibreux (4), une couche de non-tissé (8) contrecollée et qui comprend une zone de recouvrement (12) s'étendant le long du film intérieur tubulaire (12), dans laquelle les parties de bord (10a, 10b) du matériau support (6, 6a, 6b, 6c) sont soudées thermiquement l'une à l'autre,
**caractérisée**
**en ce que** la couche de non-tissé (8) sur le côté extérieur de la partie de bord inférieure (10a) située radialement à l'intérieur, est soudée thermiquement, dans la zone de recouvrement (12), au matériau support (6a) sur le côté inférieur de la partie de bord supérieure (10b) située radialement à l'extérieur, et en ce que la partie de bord supérieure (10b) située radialement à l'extérieur présente dans la zone de recouvrement, sur son côté extérieur, une structure (22) qui permet une adhérence durable d'une résine réactive.

2. Gaine selon la revendication 1,
**caractérisée**
**en ce que** la structure (22') correspond pour l'essentiel à la structure de la couche de non-tissé (8) sur le côté extérieur du matériau support (6, 6a, 6b, 6c).

3. Gaine selon la revendication 1 ou 2,
**caractérisée**
**en ce que** la structure (22') est une structure gaufrée.

4. Gaine selon l'une des revendications précédentes,
**caractérisée**
**en ce que** la zone de recouvrement (12) possède une largeur de l'ordre de 5 à 15 mm, en particulier de 8 à 12 mm, et de manière particulièrement préférée de 11 mm.

5. Gaine selon l'une des revendications précédentes,
**caractérisée**
**en ce que** entre les parties de bord (10a, 10b) en recouvrement, est disposée une couche d'un matériau non-tissé (8) homogénéisé fondu, qui relie les parties de bord (10a, 10b) du matériau support (6) en forme de bande dans la zone de recouvrement (12).

6. Gaine selon l'une des revendications précédentes,
**caractérisée**
**en ce que** le matériau support (6) comporte, sur le côté opposé à la couche de non-tissé (8), une autre couche (6a) en matériau synthétique thermofusible, en particulier polyéthylène, d'épaisseur supérieure à celle de la couche de non-tissé (8), et en ce que dans la zone de recouvrement (12), est disposée une couche sensiblement homogène constituée d'un matériau non-tissé et d'un matériau synthétique supplémentaire incorporé dans le matériau non-tissé, qui permet d'obtenir la liaison entre les parties de bord (10a, 10b).

7. Procécé de fabrication en continu d'un film intérieur tubulaire sans fin (2) pour une gaine (1) selon l'une des revendications précédentes, à partir d'un matériau support (6) en forme de bande thermosoudable présentant sur son côté extérieur une couche de non-tissé (8) contrecollée, les parties de bord (10a, 10b) du matériau support (6) en forme de bande étant amenées l'une au-dessus de l'autre et étant soudées thermiquement l'une à l'autre, dans une zone de recouvrement (12)
**caractérisé**
**en ce que** l'on introduit dans la zone de recouvrement (12), pendant le soudage thermique des deux parties de bord (10a, 10b) du matériau support (6) en forme de bande, une structure (22'), ou on maintient la structure (22') de la couche de non-tissé (8) sur le côté extérieur de la partie de bord supérieure (10b) située radicalement à l'extérieur d'une manière telle que la résine réactive puisse adhérer durablement dans la zone de recouvrement (12).

8. Procédé selon la revendication 7,
**caractérisé**
**en ce que** l'on introduit la structure (22') pendant l'opération de soudage.

9. Procédé selon la revendication 8,
**caractérisé**
**en ce que** l'on maintient la structure (22'), pendant l'opération de soudage, par refroidissement de la couche de non-tissé (8) située radialement à l'extérieur, une fois les parties de bord (10a, 10b) amenées l'une au-dessus de l'autre.

10. Procédé selon l'une des revendications 7 à 8,
**caractérisé**
**en ce que** l'on introduit la structure (22') dans le côté extérieur de la partie de bord supérieure (10b) située radialement à l'extérieur de la zone de recouvrement, par une opération de gaufrage.

11. Procédé selon la revendication 10,
**caractérisé**
**en ce que** l'introduction de la structure (22') est effectuée par un outil de gaufrage tournant (20) de type rouleau, de préférence refroidi.

12. Procédé selon la revendication 11,
**caractérisé**
**en ce que** l'outil de gaufrage tournant (20) de type rouleau est associé, pendant l'opération de soudage, à un générateur d'ultrasons (26) également tournant, qui injecte de l'énergie ultrasonore dans la zone de recouvrement (12), de préférence depuis le côté opposé à la couche de non-tissé (8) du matériau support (6).

13. Procédé selon l'une des revendications 7 à 12,
**caractérisé**
**en ce que** l'on introduit l'énergie de soudage thermique, pour relier les parties de bord (10a, 10b) dans la zone de recouvrement (12), dans une telle quantité que la couche de non-tissé (8), et/ou le matériau synthétique (6a) de la partie de bord supérieure (10b) située radialement à l'extérieur, et/ou le matériau synthétique (6c) de la partie de bord inférieure (10a) située radialement à l'intétieur, soit pour l'essentiel entièrement liquéfié(e) et homogénéisé(e) dans la zone de recouvrement (8) et que la couche de non-tissé (8) sur le côté extérieur de la partie de bord (10b) située radialement à l'extérieur reste pour l'essentiel inchangée.

14. Procédé selon l'une des revendications 7 à 13,
**caractérisé**
**en ce que** les parties de bord du matériau support (6) en forme de bande, avant de les amener l'une au-dessus de l'autre, sont chassées contre une butée longitudinale par des brosses circulant obliquement par rapport à la direction de déplacement des parties de bord.

15. Procédé selon l'une des revendications 7 à 14,
**caractérisé**
**en ce que** la couche de non-tissé (8) présente au niveau de l'une des parties de bord (10a) un point de fusion plus bas que la couche de non-tissé au niveau de l'autre partie de bord (10b) du matériau support (6) en forme de bande, de telle sorte que, une fois les deux parties de bord (10a, 10b) amenées l'une au-dessus de l'autre, la couche de non-tissé (8) ayant le point de fusion plus bas s'applique contre le côté intérieur du matériau support (6) de la partie de bord supérieure (10b) située radialement à l'extérieur.
